# EUROPÄISCHE PATENTSCHRIFT

(11) **EP 1 713 676 B1**
(45) Veröffentlichungstag und Bekanntmachung des Hinweises auf die Patenterteilung: **18.07.2007**
(21) Anmeldenummer: 05796055.1
(22) Anmeldetag: 19.09.2005
(51) Int. Cl.: B62D 1/04, B62D 1/08, B62D 1/11

(54) **LENKRAD FÜR EIN KRAFTFAHRZEUG**
STEERING WHEEL FOR A MOTOR VEHICLE
VOLANT DE DIRECTION D'UN VEHICULE AUTOMOBILE

(30) Priorität: 17.09.2004 DE 102004046321
(43) Veröffentlichungstag der Anmeldung: 25.10.2006
(73) Patentinhaber: Takata-Petri AG, 63743 Aschaffenburg (DE)
(72) Erfinder: MEISSNER, Dirk, 13467 Berlin (DE); MARKFORT, Dieter, 13088 Berlin (DE)
(74) Vertreter: Baumgärtel, Gunnar
(86) Internationale Anmeldenummer: PCT/DE2005/001665
(87) Internationale Veröffentlichungsnummer: WO 2006/029622

(56) Entgegenhaltungen:
- DE-A1- 3 239 497
- DE-C1- 19 634 102
- DE-C1- 19 701 503
- GB-A- 468 489
- US-A- 1 621 206
- US-A- 5 085 466

## Beschreibung

Die Erfindung betrifft ein Lenkrad für ein Kraftfahrzeug nach dem Oberbegriff des Patentanspruchs 1.

Ein derartiges Lenkrad umfasst einen Lenkradgrundkörper (Lenkradkorpus) zur Lagerung des Lenkrades an einem Kraftfahrzeug, insbesondere über eine am Lenkradgrundkörper vorgesehene Nabe; einen mit dem Lenkradgrundkörper verbundenen Lenkradkranz, an dem das Lenkrad zur Ausführung einer Lenkbewegung ergreifbar ist; sowie einen Verstellmechanismus zur Einstellung der Lage des Lenkradkranzes bezüglich des Lenkradgrundkörpers, mit dem die Neigung des Lenkradkranzes bezüglich des Lenkradgrundkörpers einstellbar ist und der Antriebsmittel zur Einleitung einer Verstellkraft in den Lenkradkranz umfasst, um dessen Neigung bezüglich des Lenkradgrundkörpers einstellen zu können. Der Verstellmechanismus muss dabei nicht unmittelbar auf den Lenkradkranz einwirken; sondern er kann auch auf eine mit dem Lenkradkranz gekoppelte Komponente des Lenkrades einwirken, wie zum Beispiel auf Verbindungselemente in Form von Speichen, über die der Lenkradkranz mit dem Lenkradkorpus verbunden ist.

Bei einem aus der DE 197 01 503 C1 bekannten Lenkrad dieser Art besteht der Lenkradkranz aus mehreren separaten Kranzteilen, die über eine elastische Lenkradummantelung miteinander verbunden sind und denen jeweils einen Verstellmechanismus mit einer hydraulischen Kolben-Zylindereinheit als Verstellantrieb angeordnet ist. Durch gemeinsame Verstellung der einzelnen Kranzteile des Lenkradkranzes bezüglich des Lenkradkorpus - mittels des jeweils zugeordneten Verstellantriebs - lässt sich hiermit der Abstand des Lenkradkranzes vom Lenkradkorpus entlang der Lenkachse einstellen, um die der Lenkradkranz zur Ausführung einer Lenkbewegung drehbar ist. Ferner können die einzelnen Kranzteile mittels der zugeordneten Verstellantriebe auch um einen unterschiedlichen Betrag bezüglich des Lenkradkorpus verstellt werden, was eine Einstellung der Neigung des Lenkradkranzes bezüglich des Lenkradkorpus zulässt. Die unterschiedliche Verstellbarkeit der einzelnen Kranzteile bezüglich des Lenkradkorpus wird dabei dadurch ermöglicht, dass die Kranzteile unabhängig voneinander verstellbar sind und über eine hinreichend elastische Ummantelung miteinander verbunden sind. Das bekannte Lenkrad erfordert einen mehrteiligen Aufbau des Lenkradkranzes und eine entsprechend komplizierte Ausbildung der Ummantelung des Lenkradkranzes.

Der Erfindung liegt das Problem zugrunde, ein Lenkrad der eingangsgenannten Art weiter zu verbessern.

Dieses Problem wird erfindungsgemäß durch die Schaffung eines Lenkrades mit den Merkmalen des Patentanspruchs 1 gelöst.

Danach ist zwischen den Antriebsmitteln des Verstellmechanismus und dem Lenkradkranz mindestens eine Schnittstelle angeordnet und wirkt derart, dass an der Schnittstelle zwei im Kraftfluss zwischen den Antriebsmitteln und dem Lenkradkranz liegenden Komponenten des Lenkrades zueinander verkippbar sind.

Die erfindungsgemäße Lösung ermöglicht eine Neigungsverstellung eines Lenkradkranzes bezüglich des Lenkradgrundkörpers, ohne dass hierfür ein komplizierter, mehrteiliger Aufbau des Lenkradkranzes erforderlich wäre; vielmehr kann der Lenkradkranz in einfacher Weise ein einteiliges, durchgehendes Lenkradkranzskelett aufweisen.

Die Einstellung der Neigung des Lenkradkranzes bezüglich des Lenkradgrundkörpers kann dadurch erreicht werden, dass der Abstand des Lenkradkranzes bezüglich des Lenkradgrundkörpers verändert wird, wobei mindestens zwei unterschiedlich Abschnitte des Lenkradkranzes bezüglich ihres Abstandes vom Lenkradgrundkörper relativ zueinander verstellbar sind und diese Relativbewegung der mindestens zwei Abschnitte des Lenkradkranzes durch eine Kippbewegung an der mindestens einen Schnittstelle zwischen Lenkradkranz und den zugeordneten Antriebsmitteln ermöglicht bzw. kompensiert wird.

Nach einer bevorzugten Ausführungsform der Erfindung ist der Lenkradkranz über mindestens ein Verbindungselement, bevorzugt über mehrere Verbindungselemente, in Form mindestens einer Speiche mit dem Lenkradgrundkörper verbunden und das jeweilige Verbindungselement dabei bevorzugt längsverschieblich, insbesondere teleskopierbar ausgebildet, z.B. indem ein erster Abschnitt des Verbindungselementes verschieblich an einem zweiten Abschnitt des Verbindungselements gelagert ist. Dies ermöglicht eine (stufenlose) Verstellung der Neigung des Lenkradkranzes bezüglich des Lenkradgrundkörpers, indem die Länge der einzelnen Verbindungselemente unterschiedlich eingestellt wird.

Andererseits kann durch eine gemeinsame Verstellung aller Verbindungselemente um den selben Betrag auch eine Neueinstellung des Abstandes des Lenkradkranzes (parallel zur Lenkachse) zum Lenkradgrundkörper insgesamt vorgenommen werden, ohne dass sich die Neigung, also die Winkellage, des Lenkradkranzes bezüglich des Lenkradkörpers ändert.

Gemäß einer bevorzugten Ausführungsform der Erfindung wirken die Antriebsmittel des Verstellmechanismus auf das mindestens eine Verbindungselement ein, um eine Neueinstellung der Neigung des Lenkradkranzes zu ermöglichen.

Wenn mehrere Verbindungselemente vorgesehen sind, über die der Lenkradkranz mit dem Lenkradgrundkörper verbunden ist, so umfassen die Antriebsmittel vorzugsweise eine Mehrzahl Verstellantriebe, von denen jeder einem der Verbindungselemente zugeordnet ist, insbesondere in oder an je einem der Verbindungselemente angeordnet ist, um auf das jeweilige Verbindungselement einwirken und dieses zum Beispiel in seiner Länge verstellen zu können.

Gemäß einer Ausführungsform der Erfindung ist die Schnittstelle, an der zwei Komponenten des Lenkrades derart miteinander gekoppelt sind, dass sie relativ zueinander verkippbar sind, zwischen den Antriebsmitteln und dem mindestens einen Verbindungselement wirkend vorgesehen, wobei insbesondere je eine Schnittstelle zwischen jedem Verstellantrieb und dem jeweils zugeordneten Verbindungselement wirkt.

Gemäß einer anderen Ausführungsform der Erfindung wirkt die Schnittstelle zwischen zwei Abschnitten eines jeweiligen Verbindungselementes, so dass zwei Abschnitte des Verbindungselementes die an der Schnittstelle relativ zueinander verkippbaren Komponenten des Lenkrades bilden.

Nach einer weiteren Ausführungsform der Erfindung wirkt bzw. liegt die Schnittstelle zwischen dem oder jedem Verbindungselement und dem Lenkradkranz, so dass zur Einstellung der Neigung des Lenkradkranzes dieser relativ zu dem oder jedem Verbindungselement verkippbar ist. Die Schnittstelle wirkt dabei insbesondere zwischen dem Lenkradkranzskelett und dem Skelett des oder jedes Verbindungselementes.

Eine jeweilige Schnittstelle kann dabei vorteilhaft gebildet werden durch einen gelenkigen Bereich zwischen den betreffenden Komponenten des Lenkrades, z.B. in Form eines elastisch deformierbaren Bereiches. Dieser kann gemäß einer Ausführungsform durch ein separates elastisches Element gebildet werden, welches die beiden Komponenten des Lenkrades miteinander verbindet. Andererseits kann die Schnittstelle aber auch durch eine hinreichend elastische Ummantelung des Lenkrades gebildet werden. Letztgenanntes Ausführungsbeispiel hat den zusätzlichen Vorteil, dass in besonderem Maße eine Schwingungsentkopplung zwischen den über die Schnittstelle mechanisch gekoppelten Komponenten des Lenkrades erreicht wird. Es ist daher vorteilhaft kombinierbar mit weiteren Möglichkeiten zur Bildung einer Schnittstelle, zum Beispiel einer Schnittstelle in Form einer Materialschwächung oder eines Gelenkes zwischen den beiden Komponenten des Lenkrades.

Ein jeweiliger Verstellantrieb der Antriebsmittel kann durch ein Spindelgetriebe, durch ein Zahnradgetriebe, insbesondere mit einer längsverschieblichen Zahnstange, oder durch eine Kolben-Zylinder-Einheit gebildet werden.

Zusätzlich zu der Möglichkeit, die Neigung und gegebenenfalls den Abstand des Lenkradkranzes bezüglich des Lenkradgrundkörpers bzw. Lenkradkorpus einzustellen, kann vorgesehen sein, dass der Lenkradgrundkörper Mittel zum Eingriff in eine Führungseinrichtung aufweist, entlang der der Lenkradgrundkörper zusammen mit dem Lenkradkranz bewegbar ist, so dass sich die Lage des Lenkrades insgesamt, also der aus Lenkradkranz und Lenkradgrundkörper sowie den zugehörigen Verbindungselementen bestehenden Lenkradbaugruppe, verändern lässt, z.B. für eine Höhenverstellung des Lenkrades bezüglich des Fahrzeugbodens.

Gemäß einer Variante der Erfindung ist der Verstellmechanismus, mit dem die Neigung sowie gegebenenfalls der Abstand des Lenkradkranzes bezüglich des Lenkradgrundkörpers einstellbar ist als Komforteinstellung durch einen Betätigungsmechanismus auslösbar.

Nach einer weiteren Variante der Erfindung ist der Verstellmechanismus zum Einstellen der Neigung und/oder des Abstandes des Lenkradkranzes bezüglich des Lenkradgrundkörpers mittels einer Crash-Elektronik oder einer Pre-Crash-Elektronik ansteuerbar, um in bzw. vor einem Crash-Fall eine Bewegung des Lenkradkranzes auszulösen, z.B. eine Bewegung in Richtung auf den Fahrzeugführer, und/oder beim Aufprall des Fahrzeugführers auf den Lenkradkranz (einschließlich eines indirekten Aufpralles über einen vor dem Lenkradkranz entfalteten Gassack) Energie abzubauen. Dies kann beispielsweise dadurch erfolgen, dass nach Aufprall eines Fahrzeugführers auf den Lenkradkranz eine aktive Verstellung des Lenkradkranzes in Richtung auf den Lenkradgrundkörper bewirkt wird, um zumindest einen Teil der Aufprallenergie des Fahrzeugführers zu absorbieren. Alternativ oder zusätzlich kann vorgesehen sein, dass der Verstellmechanismus in einem Crash-Fall beim Aufprall eines Fahrzeugführers auf den Lenkradkranz eine passive Verstellung des Lenkradkranzes in Richtung auf den Lenkradgrundkörper ermöglicht, um Aufprallenergie zu absorbieren.

Die erfindungsgemäße Ausgestaltung eines Lenkrades lässt sich kombinieren mit einem Gassackmodul, das derart am Lenkrad angeordnet ist, dass die Position des Gassackmodules bei einer Lenkbewegung des Lenkrades um dessen Lenkachse nicht verändert wird (so genanntes "feststehendes Gassackmodul"). Hierzu ist das Gassackmodul an einem nicht gemeinsam mit dem Lenkrad drehbaren Teil des Kraftfahrzeugs zu befestigen. Selbstverständlich ist das erfindungsgemäße Lenkrad aber auch kombinierbar mit einem derart am Lenkrad angeordneten Airbagmodul, dass dieses bei einer Lenkbewegung um die Lenkachse gedreht wird.

Weitere Einzelheiten und Vorteile der Erfindung werden bei der nachfolgenden Beschreibung von Ausführungsbeispielen anhand der Figuren deutlich werden.

Es zeigen:
- Fig. 1A: ein längsverstellbares Lenkrad für ein Kraftfahrzeug mit einem Lenkradkranz und Speichen, über die der Lenkradkranz längsverstellbar mit einem Lenkradgrundkörper verbunden ist, bei mittlerer Längeneinstellung;
- Fig. 1B: das Lenkrad aus Figur 1A bei maximaler Längeneinstellung;
- Fig. 1C: das Lenkrad aus Figur 1A bei minimaler Längeneinstellung;
- Fig. 2A: das zusätzlich neigungsverstellbare Lenkrad gemäß Figur 1a bei neutraler Neigungseinstellung;
- Fig. 2B: das Lenkrad aus Figur 2A bei maximaler Neigungseinstellung;
- Fig. 3A bis 3D: unterschiedliche Möglichkeiten zur Bildung einer Schnittstelle zwischen dem Lenkradkranz und den Speichen des Lenkrades aus den Figuren 2A und 2B;
- Fig.4A: eine Abwandlung des Lenkrades aus Figur 2A bei neutraler Neigungseinstellung;
- Fig. 4B: das Lenkrad aus Figur 4A bei abweichender Neigungseinstellung;
- Fig. 5: eine Möglichkeit zur Bildung einer Schnittstelle zwischen einem Verstellantrieb und einer Speiche des Lenkrades aus Figur 4;
- Fig. 6: ein Lenkrad gemäß einem der vorhergehenden Ausführungsbeispiele mit einem feststehenden Airbagmodul;
- Fig. 7A: ein Lenkrad gemäß einem der vorhergehenden Ausführungsbeispiele das entlang einer Führungseinrichtung verschiebbar ist;
- Fig. 7B und 7C: das Lenkrad aus Figur 7A in unterschiedlichen Positionen an der Führungseinrichtung.

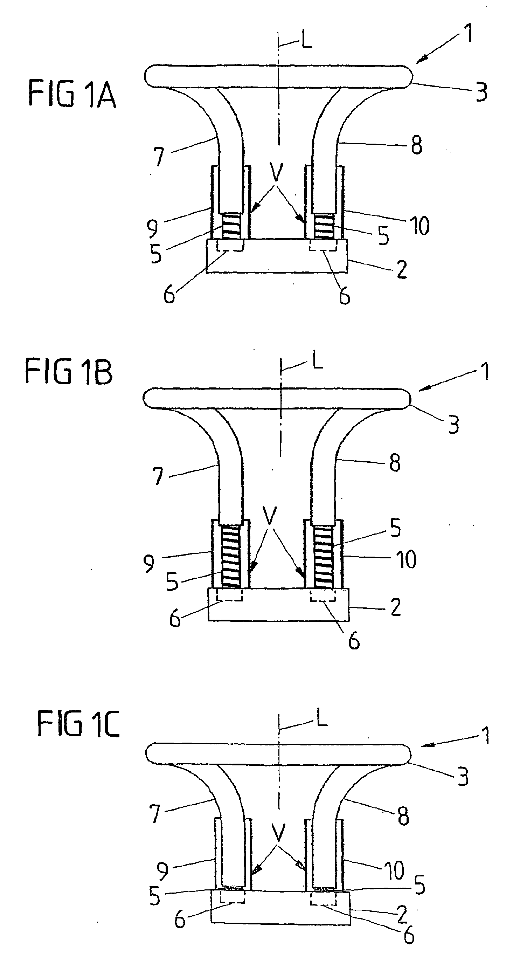

In den Figuren 1A, 1B und 1C ist ein Lenkrad 1 dargestellt, das einen Lenkradgrundkörper (Lenkradkorpus) in Form eines plattenartigen Lenkradbodens 2 zur Lagerung des Lenkrades an einem Fahrzeug sowie einen mit dem Lenkradboden 2 verbundenen Lenkradkranz 3 aufweist. Am Lenkradkranz 3 sind ein erstes Verbindungselement in Form einer ersten Speiche 7, 9 sowie ein zweites Verbindungselement in Form einer zweiten Speiche 8, 10 angeordnet, die jeweils längenveränderlich, nämlich teleskopierbar, ausgebildet sind. Hierzu greift ein erster Speichenabschnitt 7 einer ersten Speiche 7, 9 in einen am Lenkradboden 2 angeordneten zweiten Speichenabschnitt 9 der ersten Speiche, der von dem Lenkradboden 2 im Wesentlichen senkrecht absteht. Ebenso greift ein erster Abschnitt 8 einer zweiten Speiche 8, 10 in einen ebenfalls am Lenkradboden 2 angeordneten zweiten Abschnitt 10 der zweiten Speiche. Dabei sind der erste und zweite Abschnitt der ersten Speiche 7, 9 sowie der erste und zweite Abschnitt der zweiten Speiche 8, 10 jeweils beweglich zueinander gelagert.

Am Lenkradgrundkörper 2 (Lenkradkorpus) in Form eines Lenkradbodens ist dabei in bekannter Weise ein Nabenbereich ausgebildet, mit dem das Lenkrad 1 um eine Lenkachse L drehbar an einer Lenksäule (Lenkstange bzw. Lenkspindel) eines Kraftfahrzeugs lagerbar ist.

Durch Verschieben des ersten Speichenabschnitts 7 gegenüber dem zweiten Speichenabschnitt 9 der ersten Speiche 7, 9 sowie des ersten Speichenabschnitts 8 gegenüber dem zweiten Speichenabschnitt 10 der zweiten Speiche 8, 10 kann der Abstand des Lenkradkranzes 3 gegenüber dem Lenkradboden 2 in seiner Position verändert werden (Längenverstellung).

Das in der Figur 1A dargestellte Lenkrad 1 befindet sich dabei in einer halb ausgefahrenen Position, wobei die freien, vom Lenkradkranz 3 entfernten Enden des ersten Speichenabschnitts 7 der ersten Speiche 7, 9 und des ersten Speichenabschnitts 8 der zweiten Speiche 8,10 sich jeweils in einer mittleren Position innerhalb der zweiten Speichenabschnitte 9, 10 der ersten und zweiten Speiche befinden.

Die Positionierung des Lenkradkranzes 3 in Bezug auf den Lenkradboden 2 wird bei dem in der Figur 1 dargestellten Lenkrad 1 durch einen Verstellmechanismus V erreicht, der als Antriebsmittel zwei Verstellantriebe 5, 6 aufweist. Die Verstellantriebe 5, 6 sind jeweils als Spindelantriebe ausgebildet mit einer drehbar gelagerten Spindel 5, deren Spindelgewinde in das Innengewinde jeweils einer am Lenkradboden fixierten Mutter 6 eingreift. Dazu ist ein derartiger Spindelantrieb jeweils in den zweiten Speichenabschnitten 9, 10 der ersten Speiche 7, 9 und zweiten Speiche 8, 10 angeordnet.

Die Spindelmuttern 6 sind derart am Lenkradboden 2 des Lenkrads 1 festgelegt, dass sie sich weder drehen noch in axialer Richtung des jeweiligen Verstellantriebes 5, 6 in Form eine Spindelantriebs bewegen können. Alternativ zu der Fixierung der Spindelmuttern 6 am Lenkradboden 2 können diese auch an dem jeweiligen zweiten Speichenabschnitt 9 bzw. 10 der entsprechenden Speiche 7, 9; 8, 10 fixiert sein, und zwar bevorzugt an dem dem Lenkradkranz L zugeordneten freien Ende des jeweiligen zweiten Speichenabschnittes 9 bzw. 10.

Die Spindeln 5 sind demgegenüber nicht nur drehbar in der jeweils zugeordneten Spindelmutter 6 gelagert, sondern sie sind zugleich auch in axialer Richtung beweglich. Jede der beiden Spindeln 5 steht ferner derart mit dem ersten Speichenabschnitt 7 bzw. 8 der ersten Speiche 7, 9 bzw. zweiten Speichen 8, 10 des Lenkrades 1 in Verbindung, dass sie bei einer Bewegung in axialer Richtung den jeweiligen Speichenabschnitt 7, 8 mitnimmt. In dem die Axialrichtung der Verstellantriebe 5, 6 in Form von Spindelantrieben mit der Lenkachse L zusammenfällt, lässt sich durch eine Bewegung der jeweiligen Spindel 5 in axialer Richtung der zugeordnete Speichenabschnitt 7 bzw. 9 der jeweiligen Speiche 7, 9 bzw. 8, 10 in Richtung der Lenkachse L verschieben, wodurch der Abstand des Lenkradkranzes 3 vom Lenkradboden 2 stufenlos eingestellt werden kann. Die Spindeln 5 sind dabei jeweils innerhalb des zweiten Speichenabschnittes 9, 10 der zugehörigen Speiche 7, 9 bzw. 8,10 angeordnet.

In der Figur 1B ist das in der Figur 1A dargestellte Lenkrad 1 in einer maximal ausgefahrenen Position gezeigt, die ausgehend von der in der Figur 1A gezeigten Position durch Verschieben des ersten Speichenabschnitts 7 der ersten Speiche 7, 9 und des ersten Speichenabschnitts 8 der zweiten Speiche 8, 10 vom Lenkradgrundkörper 2 weg erreicht wird, wobei die Lageverschiebung wie oben beschrieben durch einen Verstellmechanismus V erreicht wird, der als Antriebsmittel zwei Verstellantriebe 5, 6 in Form von Spindelantrieben umfasst, die jeweils einer der beiden Speichen 7, 9; 8, 10 zugeordnet sind. In der hier gezeigten Ausführungsform werden gleichzeitig alle Abschnitte des Lenkradkranzes 3 um die gleiche Strecke vom Lenkradboden 2 verschoben, wodurch die Verschiebung des Lenkradkranzes 3 zum Lenkradboden 2 parallel erfolgt (Längsverschiebung), so dass hier im Ergebnis eine Längsverstellung des Lenkradkranzes 3 bezüglich des Lenkradbodens 2 entlang der Lenkachse L erfolgt.

In Figur 1C ist eine Position gezeigt, bei der der am Lenkradkranz 3 angeordnete erste Speichenabschnitt 7 der ersten Speiche 7, 9 und der erste Speichenabschnitt 8 der zweiten Speiche 8, 10 mittels des zwei Verstellantriebe 5, 6 umfassenden Verstellmechanismus V weitest möglich in die jeweiligen zweiten Speichenabschnitte 9, 10 der ersten und zweiten Speiche 7, 9; 8, 10 in Richtung zum Lenkradboden 2 bewegt wurden, was einem minimalen Auszug des Lenkradkranzes 3 bezüglich des Lenkradbodens 2 entspricht.

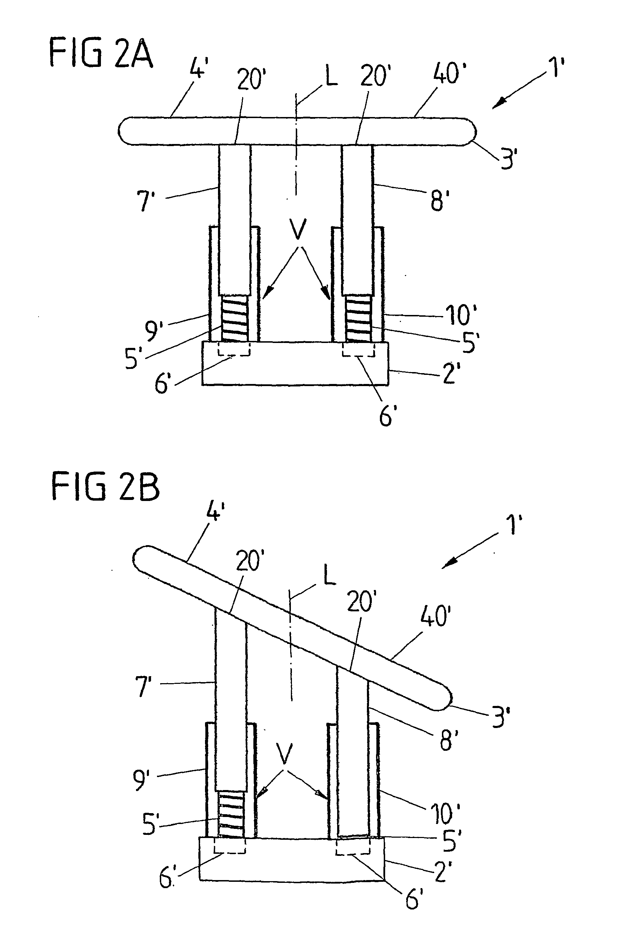

Der beschriebene Verstellmechanismus kann nicht nur wie in Figur 1 gezeigt zur Längsverstellung eines Lenkradkranzes verwendet werden, sondern kann gleichzeitig zur Neigungsverstellung des Lenkradkranzes 3 zum Lenkradboden 2 verwendet werden. Eine derartige Neigungsverstellung ist in den Figuren 2A und 2B dargestellt.

Die Figuren 2A und 2B zeigen ein Lenkrad 1' mit einer an einem Lenkradkranz 3' angeordneten ersten Speiche 7', 9' und einer zweiten Speiche 8', 10' die jeweils zueinander verstellbare Speichenabschnitte aufweisen. Zur Verstellbarkeit der Speichenabschnitte zueinander durch einen zwei Verstellantriebe 5', 6' umfassenden Verstellmechanismus V wird auf die Beschreibung der Figuren 1A und 1 B verwiesen. Der Lenkradkranz 3' des gezeigten Lenkrads 1' weist einen ersten Abschnitt 4' sowie einen zweiten Abschnitt 40' auf, die über einen Lenkradkranzskelett fest (starr) miteinander verbunden sind, wobei am ersten Abschnitt 40' die erste Speiche 7', 9' und am zweiten Abschnitt 40' die zweite Speiche 8', 10' angreift.

Bei dem in Figur 2A gezeigten Lenkrad 1' weisen der erste Abschnitt 4' und der zweite Abschnitt 40' des Lenkradkranzes 3' denselben Abstand vom Lenkradboden 2' auf.

Dabei befinden sich der erste Speichenabschnitt 7' der ersten Speiche 7', 9' und der erste Speichenabschnitt 8' der zweite Speiche 8', 10' jeweils in einer mittleren Position innerhalb der zweiten Speichenabschnitte 9', 10', was der in Figur 1A gezeigten Position der Speichen entspricht.

Durch die den beiden Speichen 7', 9' bzw. 8', 10' des Lenkrades 1' zugeordneten Verstellantriebe 5', 6' in Form je eines Spindelantriebes kann die Länge der beiden Speichen 7', 9' bzw. 8', 10' nicht nur für eine Längsverschiebung gemeinsam verstellt werden, wie anhand der Figuren 1A bis 1C erläutert, sondern es kann auch eine unterschiedliche Längeneinstellung der beiden Speichen 7', 9' einerseits und 8', 10' andererseits vorgenommen werden. Vorliegend ist anhand Figuren 2B eine Einstellung dargestellt, bei der ausgehend von der Lage des Lenkradkranzes 3' aus Figuren 2A die Länge der ersten Speiche 7', 9' in Lenkrichtung L unverändert bleibt, jedoch die Länge der zweiten Speiche 8', 10' durch den zugeordneten Spindelantrieb 5', 6' reduziert wurde. Dadurch wird der Abstand des zweiten Abschnitts 40' des Lenkradkranzes vom Lenkradboden 2' verkürzt, wohingegen gleichzeitig der Abstand des ersten Abschnitts 4' in Bezug auf den Lenkradboden 2' nicht verändert wird, da die Länge der ersten Speiche 7', 9' unverändert bleibt. Dadurch ist die in Figur 2B gezeigte Winkellage des Lenkrads 1' einstellbar, was einer Veränderung der Neigung (Winkellage) des Lenkradkranzes 3' bezüglich des Lenkradbodens 2' entspricht.

Um die hier beschriebene Neigungsverstellung des Lenkradkranzes 3' bezüglich des Lenkradbodens 2' zu ermöglichen, ist der erste Speichenabschnitt 7', 8' der jeweiligen Speiche 7', 9' bzw. 8', 10' über eine Schnittstelle 20' verkippbar am zugeordneten Abschnitt 4' bzw. 40' des Lenkradkranzes 3' angeordnet.

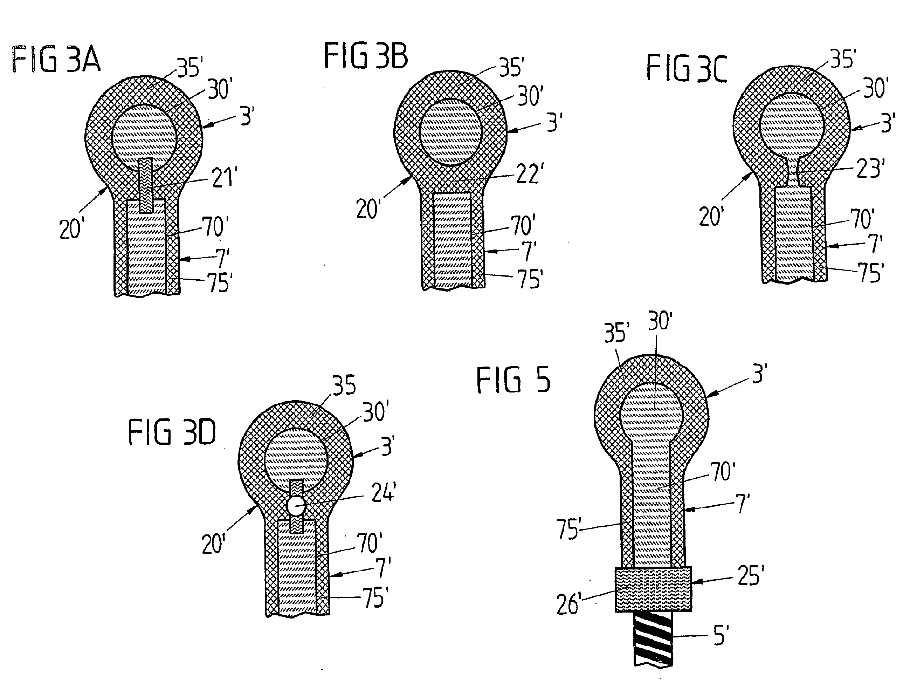

In den Figuren 3A - 3D sind unterschiedliche Möglichkeiten zur Bildung einer Schnittstelle 20' zwischen dem Lenkradkranz 3' und dem jeweiligen ersten Speichenabschnitt 7' bzw. 8' der jeweils zugeordneten Speiche 7', 9' bzw. 8', 10' dargestellt und zwar am Beispiel einer Schnittstelle 20' zwischen dem Lenkradkranz 3' und dem ersten Speichenabschnitt 7' der ersten Speiche 7', 9'.

Gemäß Figuren 3A wird der Lenkradkranz 3' gebildet durch ein ringförmig umlaufendes Lenkradkranzskelett 30' und eine das Lenkradskelett 30' vollständig umgreifende Ummantelung 35', zum Beispiel in Form einer Umschäumung des Lenkradskelettes. In entsprechender Weise weist die zugehörige Speiche bzw. deren erster Abschnitt 7' ein Speichenskelett 70' sowie eine zugeordnete Ummantelung 75' in Form einer Umschäumung auf, die mit der Ummantelung 35' des Lenkradkranzskelettes 30' einteilig ausgebildet (geformt) sein kann.

Das Lenkradkranzskelett 30' sowie das Speichenskelett 70' sind hierbei über ein in die Ummantelung 35', 75' eingelassenes elastisches Element 21' verbunden, welches eine Schnittstelle 20' bildet, die ein Verkippen des Lenkradkranzskelettes 30' und damit des Lenkradkranzes 3' insgesamt bezüglich des Speichenskelettes 70' und damit der entsprechenden Speiche 7', 9' (vergleiche Figuren 2A und 2B) insgesamt ermöglicht.

Figuren 3B zeigt eine Abwandlung der Schnittstelle 20' aus Figuren 3A, bei der die Ummantelung 35', 75' des Lenkradkranzskelettes 3' und des Speichenskelettes 70' in dem Bereich 22' zwischen dem Lenkradkranzskelett 30' und dem Speichenskelett 70' hinreichend elastisch ausgebildet ist, um ein Verkippen des Lenkradkranzskelettes 30' und damit des Lenkradkranzes 3' bezüglich des Speichenskelettes 70' und damit des entsprechenden Speichenabschnittes 7' zu gestatten.

Bei dem in Figuren 3C dargestellten Ausführungsbeispiel sind das Lenkradkranzskelett 30' und das Speichenskelett 70' über einen eine Materialschwächung 23' aufweisenden Skelettbereich miteinander verbunden, um zur Bildung einer Schnittstelle 20' ein Verkippen des Lenkradkranzskelettes 30' bezüglich des Speichenskelettes 70' zu ermöglich.

In Figuren 3D schließlich ist zur Bildung einer Schnittstelle 20' zwischen dem Lenkradkranzskelett 30' und dem Speichenskelett 70' ein Gelenk 24' in Form eines Kugelgelenkes angeordnet.

Von den in den Figuren 3A bis 3D dargestellten Ausführungsformen zur Bildung einer Schnittstelle 20' zwischen dem Lenkradkranz 3' und einem zugeordneten Speichenabschnitt 7' hat die in Figur 3B gezeigte Ausführungsform den Vorteil, dass die Bildung eines besonders elastischen Bereiches 22' der Lenkradummantelung 35', 75' zwischen Lenkradkranzskelett 30' und Speichenskelett 70' zugleich eine weitgehende Schwingungsentkoppelung zwischen dem Lenkradkranz 3' und dem entsprechenden Speichenabschnitt 7' bewirkt. Die Bildung eines elastischen Bereiches 22' der Lenkradummantelung zwischen Lenkradkranzskelett 30' und Speichenskelett 70' kann daher vorteilhaft zusätzlich auch bei den in den Figuren 3A, 3C und 3D gezeigten Ausführungsbeispielen vorgesehen sein, also in Kombination mit den dort jeweils dargestellten Mitteln 21', 23' bzw. 24' zur Bildung einer Schnittstelle 20'. Die Elastizität bzw. Flexibilität des elastischen Abschnittes 22' der Lenkradummantelung 35', 75' ist dabei so zu wählen, dass sie im normalen Lenkbetrieb eine hinreichende Drehmomentübertragung zwischen Lenkradkranz 3' und dem entsprechenden Speichenabschnitt 7' gewährleistet. Gegebenenfalls kann auch die Lenkradummantelung 35', 75' insgesamt hinreichend elastisch ausgebildet sein.

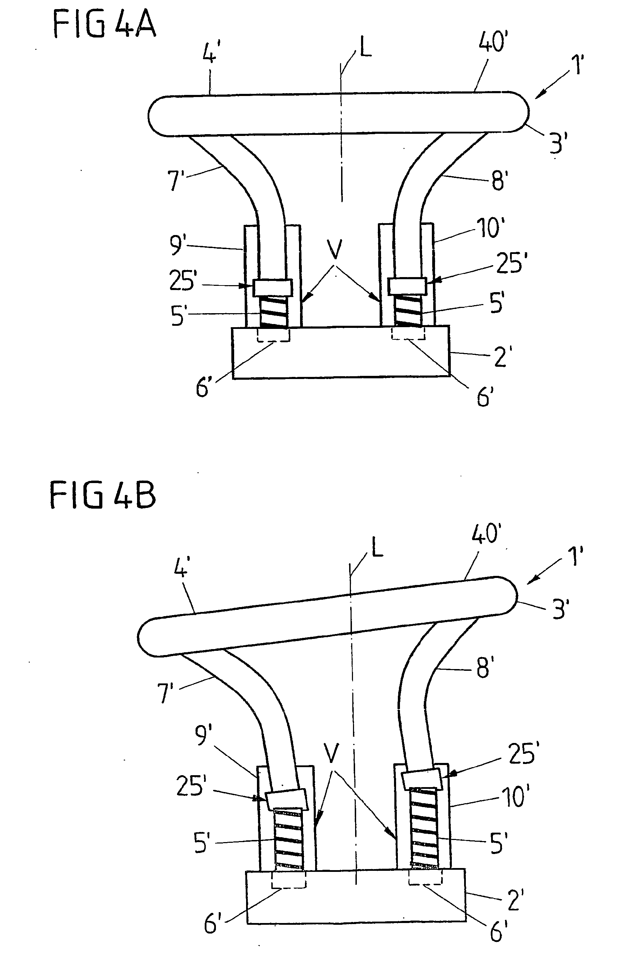

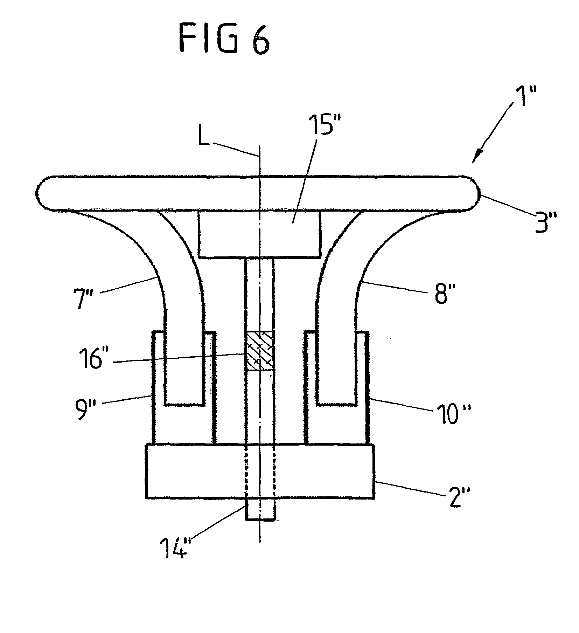

In den Figuren 4A und 4B ist eine Abwandlung des Ausführungsbeispieles aus den Figuren 2A und 2B dargestellt, wobei der Unterschied darin besteht, dass hier zur Kompensation einer Neigungsverstellung des Lenkradkranzes 3' bezüglich des Lenkradbodens 2', entsprechend dem Übergang von Figur 4A zur Figur 4B, eine Schnittstelle nicht zwischen den Speichen 7', 9'; 8', 10' und dem Lenkradkranz 3' vorgesehen ist, sondern zwischen dem jeweiligen Verstellantrieb 5', 6' und der jeweiligen Speiche 7', 9' bzw. 8', 10', genauer zwischen der Spindel 5' des jeweiligen Verstellantriebs 5', 6' und dem ersten Speichenabschnitt 7' bzw. 8' der jeweiligen Speiche 7', 9'; 8', 10'. Die Ausbildung der entsprechenden Schnittstelle 25' wird nachfolgend anhand Figur 5 näher erläutert werden.

Gemäß Figur 5, die in ihrer Darstellung den Figuren 3A bis 3D entspricht, sind das Lenkradkranzskelett 30' und das zugeordnete Speichenskelett 70' eines ersten Speichenabschnittes 7' starr miteinander verbunden. Zur Bildung einer Schnittstelle 25' zwischen dem ersten Speichenabschnitt 7' und der Spindel 5' des zugehörigen Verstellantriebs ist hier die Spindel 5' an ihrem dem ersten Speichenabschnitt 7' zugewandten freien Ende über einen gelenkigen Bereich, z.B. ein elastisch deformierbares Element 26' oder ein Gelenk, mit jenem Speichenabschnitt 7' gekoppelt.

Figur 6 zeigt eine weitere Ausführungsform des erfindungsgemäßen Lenkrads, wobei am Lenkrad 1" zusätzlich ein Gassackmodul 15" angeordnet ist. Für die Funktion des in dieser Figur nur teilweise gezeigten Verstellmechanismus wird auf die obige Beschreibung der Figuren 1 A bis 5 verwiesen.

Das in Figur 6 gezeigte Gassackmodul 15" ist mittels eines Halteelements 14" mit einem nicht mit dem Lenkrad 1" mitrotierenden Teil des Fahrzeugs verbunden. Das Halteelement 14" wird derart durch den Lenkradboden 2" geführt, dass die Position des Gassackmoduls 15" bei einer Drehbewegung des Lenkrads 1" um eine Lenkachse L nicht verändert wird. Der Drehwinkel des Gassackmoduls 15" ist also bezüglich der Lenkachse L konstant und somit von der Drehbewegung des Lenkrades 1" unabhängig.

Damit die Lage des Gassackmoduls 15" an unterschiedliche Neigungseinstellungen (Winkellagen) des Lenkradkranzes 3" bezüglich des Lenkradbodens 2" angepasst werden kann, ist im entlang der Lenkachse L erstreckten Haltelement 14" an geeigneter Stelle ein gelenkiger Bereich 16", insbesondere in Form eines elastischen Bereiches, vorgesehen.

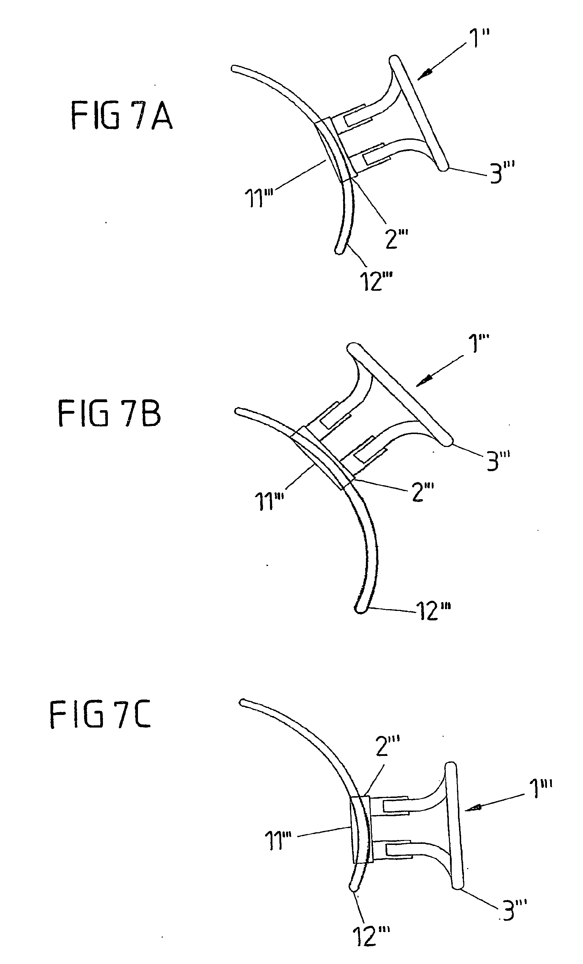

In den Figuren 7A - 7C ist ein Lenkrad dargestellt, das ebenso wie die in anhand der Figuren 1 A bis 5 beschriebenen Lenkräder über eine Längs- und Neigungsverstellung verfügt, die jedoch in den Figuren 7a bis 7C nicht näher gezeigt ist. Weiterhin ist das hier dargestellte Lenkrad in seiner Gesamtheit, das heißt einschließlich seines Lenkradgrundkörpers - bzw. Lenkradbodens 2'" und seines Lenkradkranzes 3'" in seiner Lage im Kraftfahrzeug verstellbar.

Für diese zusätzliche Verstellung ist am Lenkradboden 2'" des Lenkrads 1"' ein Element 11'" zum Eingriff in eine am Fahrzeug vorgesehene Führungseinrichtung 12'" angeordnet, wobei die Führungseinrichtung 12'" in einer vorteilhaften Ausführungsform der Erfindung als Kulisse ausgeformt ist. Diese Kulisse bildet eine Führung vorgesehen, die im Wesentlichen in vertikaler Richtung verläuft. Das in die Kulisse eingreifende Element 11'" ist somit innerhalb der Kulisse verschiebbar, so dass sich das Lenkrad insgesamt hinsichtlich seiner Lage bezüglich des Fahrzeugbodens verstellen lässt, um eine zusätzliche Anpassung der Position des Lenkrades an die Bedürfnisse unterschiedlicher Fahrer zu ermöglichen (Höhenverstellung).

Figur 4A zeigt eine Ausführungsform eines Lenkrads 1'" an einer der Kontur der Instrumententafel des Fahrzeugs folgenden Führungseinrichtung 12'" in Form einer Kulisse. Dabei greift das am Lenkradboden 2'" vorgesehene Element 11"' in die Kulissenführung ein und ist in dieser Führung verschiebbar. Durch das Verschieben des Elements 11'" entlang der Kulissenführung kann der Abstand des Lenkrads 1"' vom Boden des Kraftfahrzeugs verändert und die Position des Lenkrads 1'" der Körpergröße des Fahrzeugführers angepasst werden.

In Figur 4B ist das Lenkrad 1"' in einer Position gezeigt, bei der der Abstand des Lenkrads 1"' vom Boden des Fahrzeugs größer ist als in der in Figur 4A gezeigten Position, wohingegen bei der in Figur 4C gezeigten Position das Lenkrad 1"' einen geringe Abstand vom Boden des Fahrzeugs aufweist. Durch Verschieben des in der Kulissenführung 12"' angeordneten Elementes 11"' kann das Lenkrad 1"' stufenlos in die gewünschter Position überführt werden.

Das erfindungsgemäße Lenkrad kann über ein Teil des Lenkradgrundkörpers 2"', beispielsweise über eine Nabe, im Innern eines Fahrzeuges befestigt werden. Insbesondere kann der Lenkradboden in konventioneller Weise mittels einer Nabe an einer Lenksäule (Lenkstange bzw. Lenkspindel) befestigt werden. Jedoch ist die Erfindung nicht auf Fahrzeuge mit einer Lenksäule beschränkt; vielmehr ist die Erfindung auch in Fahrzeugen ohne Lenksäule verwendbar.

In einer vorteilhaften Weiterbildung der Erfindung ist am Lenkrad weiterhin ein elektrischer Betätigungsmechanismus angeordnet, mit dem der Fahrzeugführer den jeweiligen Verstellmechanismus auslösen kann und die Position des Lenkrads seinen individuellen Bedürfnissen anpassen kann.

Weiterhin kann das beschriebene verstellbare Lenkrad im Crash-Fall zur Absorption zumindest eines Teils der Aufprallenergie eines Fahrzeugführers eingesetzt werden. Dazu ist mindestens ein Verstellmechanismus zur Positionsverstellung des Lenkrads in Verbindung mit einer Pre-Crash- bzw. Crash-Sensorik von einer Crash-Elektronik derart ansteuerbar, dass jeweils der Lenkradkranz des Lenkrads in Richtung zum Fahrzeugführer bewegt wird.

Bei Verwendung einer Pre-Crash-Sensorik kann der Lenkradkranz des Lenkrads bereits vor dem eigentlichen Crash in Richtung zum Fahrzeugführer bewegt werden. Dazu kann ein drohender Unfall z. B. mittels eines Abstandssensors detektiert werden und bei unterschreiten eines festgelegten Abstands-Grenzwertes des Fahrzeugs zu einem außerhalb des Fahrzeugs befindlichen Objekts der Verstellmechanismus des Lenkrads ausgelöst werden. Bei Verwendung einer Crash-Sensorik wird die Verstellung des Lenkrads erst mit dem eigentlichen Crash ausgelöst. Mit dem Auftreffen des Fahrzeugführers auf dem Lenkrad wird dann der Lenkradkranz zurück in Richtung zum Lenkradboden geschoben, wodurch die Bewegung des Fahrzeugführers in Richtung auf die Windschutzscheibe abgebremst wird.

In Verbindung mit einer Pre-Crash- bzw. Crash-Sensorik zur Positionsverstellung des Lenkrads im Falle eines (drohenden) Crashs wird in einer Weiterbildung der Erfindung die durch das Auftreffen eines Fahrers auf das Lenkrad, insbesondere den Lenkradkranz erzeugte Kraft gemessen. Bei Überschreiten eines festgelegten Grenzwertes dieser Kraft wird der Lenkradkranz mittels des Verstellmechanismus aktiv in Richtung zum Lenkradboden verstellt. Dadurch können Verletzungen des Fahrzeugführers vermieden werden.

## Patentansprüche

1. Lenkrad für ein Kraftfahrzeug mit
- einem Lenkradgrundkörper zur Lagerung des Lenkrades an einem Kraftfahrzeug,
- einem mit dem Lenkradgrundkörper verbundenen Lenkradkranz und
- einem Verstellmechanismus zur Einstellung der Lage des Lenkradkranzes, mit dem die Neigung des Lenkradkranzes bezüglich des Lenkradgrundkörpers einstellbar ist und der Antriebsmittel zur Einleitung einer Verstellkraft in den Lenkradkranz umfasst, um dessen Neigung verstellen zu können,
**dadurch gekennzeichnet,**
**dass** zwischen den Antriebsmitteln (5, 6; 5', 6') und dem Lenkradkranz (3, 3') mindestens eine Schnittstelle (20', 25') angeordnet ist, an der zwei in Kraftfluss zwischen den Antriebsmitteln (5, 6; 5', 6') und dem Lenkradkranz (3, 3') liegende Komponenten des Lenkrades (1, 1') zueinander verkippbar sind.

2. Lenkrad nach Anspruch 1, **dadurch gekennzeichnet, dass** durch die Einstellung der Neigung des Lenkradkranzes (3, 3') bezüglich des Lenkradgrundkörpers (2, 2') der Abstand des Lenkradkranzes (3, 3') vom Lenkradgrundkörper (2, 2') veränderbar ist, wobei mindestens zwei Abschnitte (4', 40') des Lenkradkranzes (3') in Ihrem Abstand vom Lenkradgrundkörper (2, 2') relativ zueinander verstellt werden.

3. Lenkrad nach Anspruch 1 oder 2, **dadurch gekennzeichnet, dass** am Lenkradkranz (3, 3') mindestens ein Verbindungselement (7, 8, 9, 10; 7', 8', 9', 10') zur Verbindung mit dem Lenkradgrundkörper (2, 2') vorgesehen ist.

4. Lenkrad nach Anspruch 3, **dadurch gekennzeichnet, dass** das Verbindungselement (7, 8, 9, 10; 7', 8', 9', 10') als Speiche ausgebildet ist.

5. Lenkrad nach Anspruch 3 oder 4, **dadurch gekennzeichnet, dass** mehrere Verbindungselemente (7, 8, 9, 10; 7', 8', 9', 10') zur Verbindung des Lenkradkranzes (3, 3') mit dem Lenkradgrundkörper (2, 2') vorgesehen sind.

6. Lenkrad nach einem der Ansprüche 3 bis 5, **dadurch gekennzeichnet, dass** mindestes ein Verbindungselement (7, 8, 9, 10; 7', 8', 9', 10') längenveränderlich ausgebildet ist.

7. Lenkrad nach Anspruch 6, **dadurch gekennzeichnet, dass** das Verbindungselement (7, 8, 9, 10; 7', 8', 9', 10') teleskopierbar ausgebildet ist.

8. Lenkrad nach Anspruch 6 oder 7, **dadurch gekennzeichnet, dass** zur Verbindung des Lenkradkranzes (3, 3') mit dem Lenkradgrundkörper (2, 2') ein erster Abschnitt (7, 8; 7', 8') des Verbindungselementes (7, 8, 9, 10; 7', 8', 9', 10') verschiebbar an einem zweiten Abschnitt (9, 10; 9', 10') des Verbindungselementes gelagert ist.

9. Lenkrad nach einem der Ansprüche 6 bis 8, **dadurch gekennzeichnet, dass** das Verbindungselement (7, 8, 9, 10; 7', 8', 9', 10') in seiner Länge stufenlos verstellbar ist.

10. Lenkrad nach einem der Ansprüche 3 bis 9, **dadurch gekennzeichnet, dass** die Antriebsmittel (5, 6; 5', 6') des Verstellmechanismus auf das mindestens eine Verbindungselement (7, 8, 9, 10; 7', 8', 9', 10') einwirken.

11. Lenkrad nach Anspruch 5 und 10, **dadurch gekennzeichnet, dass** an jedem Verbindungselement (7, 8, 9, 10; 7', 8', 9', 10') ein Verstellantrieb (5, 6; 5', 6') der Antriebsmittel angreift.

12. Lenkrad nach Anspruch 10 oder 11, **dadurch gekennzeichnet, dass** ein Verstellantrieb (5, 6; 5', 6') der Antriebsmittel in oder an jedem Verbindungselement (7, 8, 9, 10; 7', 8', 9', 10') angeordnet ist.

13. Lenkrad nach einem der Ansprüche 3 bis 12, **dadurch gekennzeichnet, dass** die Schnittstelle (25') zwischen den Antriebsmitteln (5, 6; 5', 6') und dem mindestens einen Verbindungselement (7, 8, 9, 10; 7', 8', 9', 10') angeordnet ist.

14. Lenkrad nach Anspruch 11 und 13, **dadurch gekennzeichnet, dass** je eine Schnittstelle (25') zwischen jedem Verstellantrieb (5, 6; 5', 6') und dem zugeordneten Verbindungselement (7, 8, 9, 10; 7', 8', 9', 10') angeordnet ist.

15. Lenkrad nach einem der Ansprüche 3 bis 12, **dadurch gekennzeichnet, dass** die Schnittstelle zwischen zwei Abschnitten (7, 9; 8, 10; 7', 9'; 8', 10') des mindestens einen Verbindungselementes (7, 8, 9, 10; 7', 8', 9', 10') angeordnet ist.

16. Lenkrad nach einem der Ansprüche 3 bis 12, **dadurch gekennzeichnet, dass** die Schnittstelle (20') zwischen dem mindestens einen Verbindungselement (7, 8, 9, 10; 7', 8', 9', 10') und dem Lenkradkranz (3, 3') angeordnet ist.

17. Lenkrad nach Anspruch 16, **dadurch gekennzeichnet, dass** die Schnittstelle (20') zwischen einem Lenkradkranzskelett (30') und einem Skelett (70') des Verbindungselementes (7', 8', 9', 10') wirkt.

18. Lenkrad nach einem der vorhergehenden Ansprüche, **dadurch gekennzeichnet, dass** die Schnittstelle (20', 25') durch einen gelenkigen Bereich (21', 22', 23', 24', 26') zwischen zwei Komponenten des Lenkrades (1) gebildet wird.

19. Lenkrad nach Anspruch 18, **dadurch gekennzeichnet, dass** der gelenkige Bereich (21', 22', 23', 26') als ein elastisch deformierbarer Bereich ausgebildet ist.

20. Lenkrad nach Anspruch 18 oder 19, **dadurch gekennzeichnet, dass** der gelenkige Bereich durch ein separates elastisches Element (21', 26') gebildet wird.

21. Lenkrad nach Anspruch 18 oder 19, **dadurch gekennzeichnet, dass** der gelenkige Bereich durch eine Materialschwächung (23') gebildet wird.

22. Lenkrad nach einem der Ansprüche 18 bis 21, **dadurch gekennzeichnet, dass** an der Schnittstelle (20') ein elastischer Bereich (22') einer Ummantelung (35', 75') des Lenkrades (1) vorgesehen ist, der ein relatives Verkippen beidseits des elastischen Bereiches (22') der Ummantelung liegender Komponenten (30', 70') des Lenkrades (1) ermöglicht.

23. Lenkrad nach Anspruch 18 oder 22, **dadurch gekennzeichnet, dass** die Schnittstelle (20') ein Gelenk (24') aufweist.

24. Lenkrad nach einem der vorhergehenden Ansprüche, **dadurch gekennzeichnet, dass** die Antriebsmittel (5, 6; 5', 6') ein Spindelgetriebe umfassen.

25. Lenkrad nach einem der Ansprüche 1 bis 23, **dadurch gekennzeichnet, dass** die Antriebsmittel eine Kolben-Zylinder-Einheit umfassen.

26. Lenkrad nach einem der Ansprüche 1 bis 23, **dadurch gekennzeichnet, dass** die Antriebsmittel ein Zahnradgetriebe, insbesondere ein Zahnstangengetriebe, umfassen.

27. Lenkrad nach einem der vorhergehenden Ansprüche, **dadurch gekennzeichnet, dass** der Lenkradgrundkörper (2, 2') als Lenkradboden ausgebildet ist.

28. Lenkrad nach einem der vorhergehenden Ansprüche, **dadurch gekennzeichnet, dass** die Lagerung des Lenkrades (1, 1') am Kraftfahrzeug mittels eines am Lenkradgrundkörper (2, 2') vorgesehenen Nabenbereiches erfolgt.

29. Lenkrad nach einem der vorhergehenden Ansprüche, **dadurch gekennzeichnet, dass** mit dem Verstellmechanismus zusätzlich der Abstand des Lenkradkranzes (3, 3') vom Lenkradgrundkörper (2, 2') bei konstanter Neigung des Lenkradkranzes (3, 3') einstellbar ist.

30. Lenkrad nach einem der vorhergehenden Ansprüche, **dadurch gekennzeichnet, dass** der Lenkradgrundkörper (2"') zum Verstellen der Lage des gesamten Lenkrades (1"') entlang einer Führungseinrichtung (12'") ein Element (11"') zum Eingriff in die Führungseinrichtung (12"') aufweist.

31. Lenkrad nach mindestens einem der vorhergehenden Ansprüche, **dadurch gekennzeichnet, dass** der Verstellmechanismus mittels eines Betätigungsmechanismus manuell auslösbar ist.

32. Lenkrad nach einem der vorhergehenden Ansprüche, **dadurch gekennzeichnet, dass** der Verstellmechanismus im Crashfall der Absorption zumindest eines Teils der Aufprallenergie eines Fahrzeugführers dient, indem der Verstellmechanismus vor dem Aufprall eines Fahrzeugführers eine Bewegung des Lenkradkranzes (3, 3', 3") zum Fahrzeugführer hin bewirkt.

33. Lenkrad nach Anspruch 32, **dadurch gekennzeichnet, dass** der Verstellmechanismus zum Verstellen des Lenkrades (1, 1', 1", 1"') mittels einer Pre-Crash-Elektronik und/oder einer Crash-Elektronik ansteuerbar ist.

34. Lenkrad nach einem der vorhergehenden Ansprüche, **dadurch gekennzeichnet, dass** der Verstellmechanismus im Crashfall beim Aufprall eines Fahrzeugführers auf den Lenkradkranz (3, 3', 3") eine aktive Verstellung des Lenkradkranzes (3, 3', 3") in Richtung zum Lenkradgrundkörper (2, 2', 2", 2"') bewirkt, um zumindest einen Teil der Aufprallenergie des Fahrzeugführers zu absorbieren.

35. Lenkrad nach einem der Ansprüche 1 bis 33, **dadurch gekennzeichnet, dass** der Verstellmechanismus im Crashfall beim Aufprall eines Fahrzeugführers auf den Lenkradkranz (3, 3', 3") eine passive Verstellung des Lenkradkranzes (3, 3', 3") in Richtung zum Lenkradgrundkörper (2, 2', 2", 2"') ermöglicht, um zumindest einen Teil der Aufprallenergie des Fahrzeugführers zu absorbieren.

36. Lenkrad nach einem der vorhergehenden Ansprüche, **gekennzeichnet durch** ein Gassackmodul (15"), dass derart am Lenkrad (1 ") angeordnet ist, dass die Position des Gassackmoduls (15") bei einer Drehbewegung des Lenkrads (1") um eine Lenkachse (16") nicht verändert wird.

37. Lenkrad nach Anspruch 36, **dadurch gekennzeichnet, dass** das Gassackmodul (15") an einem nicht mit dem Lenkrad (1"') rotierenden Teil des Fahrzeugs befestigbar ist.

## Claims

1. A steering wheel for a motor vehicle, with
- a steering wheel basic body for mounting the steering wheel on a motor vehicle,
- a steering wheel rim connected to the steering wheel basic body, and
- an adjusting mechanism for setting the position of the steering wheel rim, with which the inclination of the steering wheel rim with respect to the steering wheel basic body can be set and which comprises driving means for introducing an adjusting force into the steering wheel rim in order to be able to adjust the inclination thereof,
**characterized in that**
at least one interface (20', 25') is arranged between the driving means (5, 6; 5', 6') and the steering wheel rim (3, 3'), at which two components of the steering wheel (1, 1') that are situated in the force flux between the driving means (5, 6; 5', 6') and the steering wheel rim (3, 3') can be tilted with respect to each other.

2. The steering wheel as claimed in claim 1, **characterized in that** the distance of the steering wheel rim (3, 3') from the steering wheel basic body (2, 2') can be changed by the setting of the inclination of the steering wheel rim (3, 3') with respect to the steering wheel basic body (2, 2'), with at least two sections (4', 40') of the steering wheel rim (3') being adjusted relative to each other in their distance from the steering wheel basic body (2, 2').

3. The steering wheel as claimed in claim 1 or 2, **characterized in that** at least one connecting element (7, 8, 9, 10; 7', 8', 9', 10') for connecting to the steering wheel basic body (2, 2') is provided on the steering wheel rim (3, 3').

4. The steering wheel as claimed in claim 3, **characterized in that** the connecting element (7, 8, 9, 10; 7', 8', 9', 10') is designed as a spoke.

5. The steering wheel as claimed in claim 3 or 4, **characterized in that** a plurality of connecting elements (7, 8, 9, 10; 7', 8', 9', 10') are provided for connecting the steering wheel rim (3, 3') to the steering wheel basic body (2, 2').

6. The steering wheel as claimed in claims 3 to 5, **characterized in that** at least one connecting element (7, 8, 9, 10; 7', 8', 9', 10') is of length-changeable design.

7. The steering wheel as claimed in claim 6, **characterized in that** the connecting element (7, 8, 9, 10; 7', 8', 9', 10') is of telescopic design.

8. The steering wheel as claimed in claim 6 or 7, **characterized in that**, to connect the steering wheel rim (3, 3') to the steering wheel basic body (2, 2'), a first section (7, 8; 7', 8') of the connecting element (7, 8, 9, 10; 7', 8', 9', 10') is mounted displaceably on a second section (9, 10; 9', 10') of the connecting element.

9. The steering wheel as claimed in one of claims 6 to 8, **characterized in that** the connecting element (7, 8, 9, 10; 7', 8', 9', 10') can be adjusted in its length in an infinitely variable manner.

10. The steering wheel as claimed in one of claims 3 to 9, **characterized in that** the driving means (5, 6; 5' , 6') of the adjusting mechanism act on the at least one connecting element (7, 8, 9, 10; 7', 8', 9', 10').

11. The steering wheel as claimed in claims 5 and 10, **characterized in that** an adjusting drive (5, 6; 5', 6') of the driving means acts on each connecting element (7, 8, 9, 10; 7', 8', 9', 10').

12. The steering wheel as claimed in claim 10 or 11, **characterized in that** an adjusting drive (5, 6; 5', 6') of the driving means is arranged in or on each connecting element (7, 8, 9, 10; 7' , 8' , 9' , 10') .

13. The steering wheel as claimed in one of claims 3 to 12, **characterized in that** the interface (25') is arranged between the driving means (5, 6; 5', 6') and the at least one connecting element (7, 8, 9, 10; 7', 8' , 9' , 10').

14. The steering wheel as claimed in claims 11 and 13, **characterized in that** a respective interface (25') is arranged between each adjusting drive (5, 6; 5', 6') and the assigned connecting element (7, 8, 9, 10; 7', 8', 9', 10').

15. The steering wheel as claimed in one of claims 3 to 12, **characterized in that** the interface is arranged between two sections (7, 9; 8, 10; 7', 9'; 8', 10') of the at least one connecting element (7, 8, 9, 10; 7', 8', 9', 10').

16. The steering wheel as claimed in one of claims 3 to 12, **characterized in that** the interface (20') is arranged between the at least one connecting element (7, 8, 9, 10; 7', 8', 9', 10') and the steering wheel rim (3, 3').

17. The steering wheel as claimed in claim 16, **characterized in that** the interface (20') acts between a steering wheel rim skeleton (30') and a skeleton (70') of the connecting element (7', 8', 9', 10').

18. The steering wheel as claimed in one of the preceding claims, **characterized in that** the interface (20', 25') is formed by an articulated region (21', 22', 23', 24', 26') between two components of the steering wheel (1).

19. The steering wheel as claimed in claim 18, **characterized in that** the articulated region (21', 22', 23', 26') is designed as an elastically deformable region.

20. The steering wheel as claimed in claim 18 or 19, **characterized in that** the articulated region is formed by a separate, elastic element (21', 26').

21. The steering wheel as claimed in claim 18 or 19, **characterized in that** the articulated region is formed by a material weakening (23').

22. The steering wheel as claimed in one of claims 18 to 21, **characterized in that** an elastic region (22') of a casing (35', 75') of the steering wheel (1) is provided at the interface (20'), said region permitting a relative tilting of components (30', 70') of the steering wheel that are situated on both sides of the elastic region (22') of the casing.

23. The steering wheel as claimed in claim 18 or 22, **characterized in that** the interface (20') has a joint (24').

24. The steering wheel as claimed in one of the preceding claims, **characterized in that** the driving means (5, 6; 5', 6') comprise a spindle mechanism.

25. The steering wheel as claimed in one of claims 1 to 23, **characterized in that** the driving means comprise a piston-cylinder unit.

26. The steering wheel as claimed in one of claims 1 to 23, **characterized in that** the driving means comprise a toothed wheel mechanism, in particular a rack mechanism.

27. The steering wheel as claimed in one of the preceding claims, **characterized in that** the steering wheel basic body (2, 2') is designed as a steering wheel base.

28. The steering wheel as claimed in one of the preceding claims, **characterized in that** the steering wheel (1, 1') is mounted on the motor vehicle by means of a hub region provided on the steering wheel basic body (2, 2').

29. The steering wheel as claimed in one of the preceding claims, **characterized in that** the adjusting mechanism can additionally be used to set the distance of the steering wheel rim (3, 3') from the steering wheel basic body (2, 2') at a constant inclination of the steering wheel rim (3, 3').

30. The steering wheel as claimed in one of the preceding claims, **characterized in that**, to adjust the position of the entire steering wheel (1"') along a guide device (12"'), the steering wheel basic body (2"') has an element (11"') for engaging in the guide device (12"').

31. The steering wheel as claimed in at least one of the preceding claims, **characterized in that** the adjusting mechanism can be triggered manually by means of an actuating mechanism.

32. The steering wheel as claimed in one of the preceding claims, **characterized in that**, in the event of a crash, the adjusting mechanism serves to absorb at least part of the impact energy of a vehicle driver by the adjusting mechanism, before the impact of a vehicle driver, bringing about a movement of the steering wheel rim (3, 3', 3") toward the vehicle driver.

33. The steering wheel as claimed in claim 32, **characterized in that** the adjusting mechanism for adjusting the steering wheel (1, 1', 1", 1"') can be activated by means of pre-crash electronics and/or crash electronics.

34. The steering wheel as claimed in one of the preceding claims, **characterized in that**, in the event of a crash, when a vehicle driver impacts against the steering wheel rim (3, 3', 3"), the adjusting mechanism brings about an active adjustment of the steering wheel rim (3, 3', 3") in the direction of the steering wheel basic body (2, 2', 2", 2"') in order to absorb at least part of the impact energy of the vehicle driver.

35. The steering wheel as claimed in one of claims 1 to 33, **characterized in that**, in the event of a crash, when a vehicle driver impacts against the steering wheel rim (3, 3', 3"), the adjusting mechanism permits a passive adjustment of the steering wheel rim (3, 3', 3'') in the direction of the steering wheel basic body (2, 2', 2", 2"') in order to absorb at least part of the impact energy of the vehicle driver.

36. The steering wheel as claimed in one of the preceding claims, **characterized by** an airbag module (15'') which is arranged on the steering wheel (1") in such a manner that the position of the airbag module (15") is not changed during a rotational movement of the steering wheel (1") about a steering axis (16").

37. The steering wheel as claimed in claim 36, **characterized in that** the airbag module (15") can be fastened to a part of the vehicle that does not rotate with the steering wheel (1"').

## Revendications

1. Volant de direction pour un véhicule automobile, comprenant :
- un corps de base de volant pour le montage du volant sur un véhicule automobile,
- une couronne de volant reliée au corps de base, et
- un mécanisme de réglage pour établir la position de la couronne de volant, au moyen duquel il est possible de régler l'inclinaison de la couronne de volant par rapport au corps de base, et qui comprend des moyens d'entraînement pour appliquer une force de réglage dans la couronne de volant pour pouvoir régler son inclinaison,
**caractérisé en ce que**
entre les moyens d'entraînement (5, 6 ; 5', 6') et la couronne de volant (3, 3') est agencée au moins une interface (20', 25') sur laquelle deux composants du volant (1, 1'), disposés dans le flux des efforts entre les moyens d'entraînement (5, 6 ; 5', 6') et la couronne de volant (3, 3'), sont susceptibles d'être basculés l'un par rapport à l'autre.

2. Volant de direction selon la revendication 1, **caractérisé en ce que**, par réglage de l'inclinaison de la couronne de volant (3, 3') par rapport au corps de base (2, 2'), la distance entre la couronne de volant (3, 3') et le corps de base (2, 2') est modifiable, et au moins deux tronçons (4', 40') de la couronne de volant (3') sont réglables l'un par rapport à l'autre quant à leur distance depuis le corps de base (2, 2').

3. Volant de direction selon la revendication 1 ou 2, **caractérisé en ce qu'**au moins un élément de liaison (7, 8, 9, 10 ; 7', 8', 9', 10') est prévu sur la couronne de volant (3, 3') pour la liaison avec le corps de base (2, 2').

4. Volant de direction selon la revendication 3, **caractérisé en ce que** l'élément de liaison (7, 8, 9, 10 ; 7', 8', 9', 10') est réalisé sous forme de rayon.

5. Volant de direction selon la revendication 3 ou 4, **caractérisé en ce qu'**il est prévu plusieurs éléments de liaison (7, 8, 9, 10 ; 7', 8', 9', 10') pour la liaison de la couronne (3, 3') avec le corps de base (2, 2').

6. Volant de direction selon l'une quelconque des revendications 3 à 5, **caractérisé en ce qu'**au moins un élément de liaison (7, 8, 9, 10 ; 7', 8', 9', 10') est réalisé à longueur variable.

7. Volant de direction selon la revendication 6, **caractérisé en ce que** l'élément de liaison (7, 8, 9, 10 ; 7', 8', 9', 10') est réalisé de manière à pouvoir être télescopé.

8. Volant de direction selon la revendication 6 ou 7, **caractérisé en ce que**, pour la liaison de la couronne (3, 3') avec le corps de base (2, 2'), un premier tronçon (7, 8 ; 7', 8') de l'élément de liaison (7, 8, 9, 10 ; 7', 8', 9', 10') est monté à déplacement sur un second tronçon (9, 10 ; 9', 10') de l'élément de liaison.

9. Volant de direction selon l'une quelconque des revendications 6 à 8, **caractérisé en ce que** l'élément de liaison (7, 8, 9, 10 ; 7', 8', 9', 10') est réglable en continu dans sa longueur.

10. Volant de direction selon l'une quelconque des revendications 3 à 9, **caractérisé en ce que** les moyens d'entraînement (5, 6 ; 5', 6') du mécanisme de réglage agissent sur ledit au moins un élément de liaison (7, 8, 9, 10 ; 7', 8', 9', 10').

11. Volant de direction selon les revendications 5 et 10, **caractérisé en ce que** qu'un entraînement de réglage (5, 6 ; 5', 6') des moyens d'entraînement attaque au niveau de chaque élément de liaison (7, 8, 9, 10 ; 7', 8', 9', 10').

12. Volant de direction selon la revendication 10 ou 11, **caractérisé en ce qu'**un entraînement de réglage (5, 6 ; 5', 6') des moyens d'entraînement est agencé dans ou sur chaque élément de liaison (7, 8, 9, 10 ; 7', 8', 9', 10').

13. Volant de direction selon l'une quelconque des revendications 3 à 12, **caractérisé en ce que** l'interface (25') est agencée entre les moyens d'entraînement (5, 6 ; 5', 6') et ledit au moins un élément de liaison (7, 8, 9, 10 ; 7', 8', 9', 10').

14. Volant de direction selon les revendications 11 et 13, **caractérisé en ce qu'**une interface respective (25') est agencée entre chaque entraînement de réglage (5, 6 ; 5', 6') et l'élément de liaison associé (7, 8, 9, 10 ; 7', 8', 9', 10').

15. Volant de direction selon l'une quelconque des revendications 3 à 12, **caractérisé en ce que** l'interface est agencée entre deux tronçons (7, 9; 8, 10; 7', 9'; 8', 10') dudit au moins un élément de liaison (7, 8, 9, 10; 7', 8', 9', 10').

16. Volant de direction selon l'une quelconque des revendications 3 à 12, **caractérisé en ce que** l'interface (20') est agencée entre ledit au moins un élément de liaison (7, 8, 9, 10 ; 7', 8', 9', 10') et la couronne de volant (3, 3').

17. Volant de direction selon la revendication 16, **caractérisé en ce que** l'interface (20') agit entre une ossature de couronne de volant (30') et une ossature (70') de l'élément de liaison (7', 8', 9', 10').

18. Volant de direction selon l'une quelconque des revendications précédentes, **caractérisé en ce que** l'interface (20', 25') est formée par une zone articulée (21', 22', 23', 24', 26') entre deux composants du volant (1).

19. Volant de direction selon la revendication 18, **caractérisé en ce que** la zone articulée (21', 22', 23', 26') est formée par une zone élastique déformable.

20. Volant de direction selon la revendication 18 ou 19, **caractérisé en ce que** la zone articulée est formée par un élément élastique séparé (21', 26').

21. Volant de direction selon la revendication 18 ou 19, **caractérisé en ce que** la zone articulée est formée par un affaiblissement de matière (23').

22. Volant de direction selon l'une quelconque des revendications 18 à 21, **caractérisé en ce qu'**au niveau de l'interface (20'), il est prévu une zone élastique (22') d'une enveloppe (35', 75') du volant (1) qui permet un basculement relatif des deux composants (30', 70') du volant de direction (1) situés des deux côtés de la zone élastique (22') de l'enveloppe.

23. Volant de direction selon la revendication 18 ou 22, **caractérisé en ce que** l'interface (20') comprend une articulation (24').

24. Volant de direction selon l'une quelconque des revendications précédentes, **caractérisé en ce que** les moyens d'entraînement (5, 6 ; 5', 6') comprennent un entraînement à broche.

25. Volant de direction selon l'une quelconque des revendications 1 à 23, **caractérisé en ce que** les moyens d'entraînement comprennent une unité à piston-et-cylindre.

26. Volant de direction selon l'une quelconque des revendications 1 à 23, **caractérisé en ce que** les moyens d'entraînement comprennent une transmission à roue dentée, en particulier une transmission à crémaillère.

27. Volant de direction selon l'une quelconque des revendications précédentes, **caractérisé en ce que** le corps de base de volant de direction (2, 2') est réalisé sous forme d'un fond de volant.

28. Volant de direction selon l'une quelconque des revendications précédentes, **caractérisé en ce que** le montage du volant (1, 1') est effectué sur le véhicule automobile au moyen d'une zone de moyeu prévue sur le corps de base de volant (2, 2').

29. Volant de direction selon l'une quelconque des revendications précédentes, **caractérisé en ce qu'**au moyen du mécanisme de réglage, il est possible de régler en supplément la distance de la couronne de volant (3, 3') par rapport au corps de base (2, 2') pour une inclinaison constante de la couronne de volant (3, 3').

30. Volant de direction selon l'une quelconque des revendications précédentes, **caractérisé en ce que** le corps de base (2"') du volant présente, pour régler la position de l'ensemble du volant (1"') le long d'un dispositif de guidage (12"'), un élément (11"') pour l'engagement dans le dispositif de guidage (12"').

31. Volant de direction selon l'une au moins des revendications précédentes, **caractérisé en ce que** le mécanisme de réglage est susceptible d'être déclenché manuellement au moyen d'un mécanisme d'actionnement.

32. Volant de direction selon l'une quelconque des revendications précédentes, **caractérisé en ce que** le mécanisme de réglage sert en cas de collision à l'absorption d'une partie au moins de l'énergie d'impact d'un conducteur du véhicule, **en ce que** le mécanisme de réglage, avant l'impact d'un conducteur du véhicule, provoque un mouvement de la couronne de volant (3, 3', 3") vers le conducteur du véhicule.

33. Volant de direction selon la revendication 32, **caractérisé en ce que** le mécanisme de réglage est pilotable pour régler le volant de direction (1, 1', 1", 1"') au moyen d'un système électronique de pré-collision et/ou un système électronique de collision.

34. Volant de direction selon l'une quelconque des revendications précédentes, **caractérisé en ce que** le mécanisme de réglage a pour effet, en cas de collision et lors d'un impact du conducteur du véhicule sur la couronne de volant (3, 3', 3"), un réglage actif de la couronne de volant (3, 3', 3") en direction du corps de base (2, 2', 2", 2"') pour absorber au moins une partie de l'énergie d'impact du conducteur du véhicule.

35. Volant de direction selon l'une quelconque des revendications 1 à 33, **caractérisé en ce que** le mécanisme de réglage permet, en cas de collision et lors d'un impact d'un conducteur du véhicule sur la couronne de volant (3, 3', 3"), un réglage passif de la couronne de volant (3, 3', 3") en direction vers le corps de base du volant (2, 2', 2", 2"') pour absorber au moins une partie de l'énergie d'impact du conducteur de véhicule.

36. Volant de direction selon l'une quelconque des revendications précédentes, **caractérisé par** un module de sac à gaz (15"), qui est agencé sur le volant (1") de telle façon que la position du module de sac à gaz (15") n'est pas modifiée lors d'un mouvement de rotation du volant (1") autour de son axe d'articulation (16").

37. Volant de direction selon la revendication 36, **caractérisé en ce que** le module de sac à gaz (15") est susceptible d'être fixé à partie du véhicule qui ne tourne pas avec le volant de direction (1'").
